# EUROPÄISCHE PATENTSCHRIFT

(11) **EP 2 260 566 B1**
(45) Veröffentlichungstag und Bekanntmachung des Hinweises auf die Patenterteilung: **21.09.2011**
(21) Anmeldenummer: 08873699.6
(22) Anmeldetag: 19.11.2008
(51) Int. Cl.: H02K 11/02

(54) **ENTSTÖRVORRICHTUNG FÜR DAS KOMMUTIERUNGSSYSTEM EINES GLEICHSTROMMOTORS**
EMI-FILTER FOR THE COMMUTATING SYSTEM OF A DC MOTOR
DISPOSITIF DE DÉPARASITAGE POUR LE SYSTÈME DE COMMUTATION D'UN MOTEUR À COURANT CONTINU

(30) Priorität: 31.03.2008 DE 102008000887
(43) Veröffentlichungstag der Anmeldung: 15.12.2010
(73) Patentinhaber: Robert Bosch GmbH, 70442 Stuttgart (DE)
(72) Erfinder: HEIMLICH, Luc, 67690 Hatten (FR); MAIER, Gerald, 77833 Ottersweier-Unzhurst (DE); LAURENT, Stephane, 67100 Strasbourg (FR); WEGNER, Norbert, 77815 Buehl (DE); MAELZER, Michael, 77815 Buehl (DE)
(86) Internationale Anmeldenummer: PCT/EP2008/065779
(87) Internationale Veröffentlichungsnummer: WO 2009/121428

(56) Entgegenhaltungen:
- DE-A1- 19 804 369
- DE-A1-102004 046 299
- DE-A1-102005 059 179
- GB-A- 2 140 218
- JP-A- 2001 095 194
- US-B1- 6 307 344

## Beschreibung

### Stand der Technik

Die Erfindung geht aus von einer Entstörvorrichtung für das Kommutierungssystem eines Gleichstrommotors nach der Gattung des unabhängigen Anspruchs. Aus der DE 10 2004 003 419 A1 ist bereits eine Entstörvorrichtung zum Absorbieren und/oder zum Reflektieren und/oder Dämpfen der elektrischen und/oder elektromagnetischen Störemissionen einer Kommutierungseinrichtung einer elektrischen Maschine bekannt mit einer der Kommutierungseinrichtung zugewandten Leiterplatte, auf der mindestens eine als Abschirmfläche wirkende Leiterfläche angeordnet ist. Die Leiterplatte ist kombiniert mit einer hohlzylindrisch ausgebildeten Schirmvorrichtung, welche die Kommutierungseinrichtung umgibt und einseitig durch die Leiterplatte abgeschlossen ist. Zusätzlich kann auf der von der Kommutierungseinrichtung abgewandten Seite der Leiterplatte ein elektrisches Entstörfilter in Reihe mit den Stromzuleitungen der elektrischen Maschine angeordnet werden, um die leitungsgebundenen Störemissionen der Maschine zu dämpfen und/oder zu absorbieren. Eine derartige Anordnung ermöglicht zwar eine gute Abschirmung der Kommutierungseinrichtung eines Gleichstrommotors, die technische Ausführung ist jedoch aufwendig und schwierig in einen Motor zu integrieren. Im Falle von Getriebemotoren schlägt das Dokument GB2140218 vor, ein Abschirmungsblech zwischen dem Getriebegehäuse und dem Motorgehäuse zu montieren. Das Dokument DE 19804369 schlägt vor, die Bürstenvorrichtung mit einem leitfähigen,
metallischen Abschirmbecher zu umgeben. Offenbarung der Erfindung Die erfindungsgemäße Entstörvorrichtung mit den Merkmalen des unabhängigen Anspruchs hat demgegenüber den Vorteil, dass eine weitgehende Eliminierung der abgestrahlten und der leitungsgebundenen, durch den Motor verursachten EMV-Störungen mit verhältnismäßig geringem Aufwand und mit geringen zusätzlichen Kosten erreicht wird. Vorzugsweise sind hierzu Durchführungskondensatoren in Öffnungen für die Durchführung der Anschlussleitungen des Motors durch das Abschirmteil eingefügt. Stattdessen können jedoch auch SMD-Bauelemente in der Nähe der Durchführungsöffnungen angeordnet werden.

In konstruktiver Hinsicht hat es sich dabei als vorteilhaft erwiesen, wenn das Abschirmteil als Kappe ausgebildet wird und der Bürstenträger in einer Aussparung eines metallischen Motorgehäuses und/oder eines an den Motor angeflanschten Getriebegehäuses sitzt, welche durch die Kappe abgedeckt wird. Vorzugsweise ist in diesem Fall das Kommutierungssystem des Motors in das Gehäuse eines an den Motor angeflanschten Getriebes integriert, welches dann bei Verwendung der erfindungsgemäßen Abschirmkappe durch einen Kunststoffdeckel verschlossen werden kann, wodurch gegenüber einer metallischen Getriebeabdeckung zusätzlich Kosten und Gewicht eingespart werden.

Bezüglich der Gestaltung der Abschirmkappe ist es zweckmäßig, wenn diese wannenförmig, vorzugsweise als elektrisch und magnetisch leitfähiges Blechbiegeteil ausgebildet ist und den vom Kommutator abgewandten äußeren Teil des Bürstenträgers des Motors überdeckt. Bevorzugt bilden der Bürstenträger und die Abschirmkappe hierbei eine vorgefertigte Baueinheit, welche bei geeigneter Gestaltung des Bürstenträgers, beispielsweise bei einer im Wesentlichen U-förmigen Ausbildung des Bürstenträgers, nach dem Zusammenbau des Motors und des Getriebes in einfacher Weise auf den Kommutator aufgesteckt werden kann.

Hinsichtlich der Reduzierung der leitungsgebundenen Störungen ist es vorteilhaft, wenn die Abschirmkappe Aussparungen aufweist, in denen keramische Durchführungskondensatoren für die Anschlussleitungen sitzen. Diese Filter können gleichzeitig als Isolierung und Arretierung der Leitungen sowie als Hochfrequenzdichtungen für die Durchführungsöffnungen in der Kappe dienen.

Wenn zusätzlich zu den kapazitiven Entstörmitteln auch induktive Entstörmittel vorgesehen werden ist der Bürstenträger zweckmäßigerweise so gestaltet, dass die benötigten Induktivitäten in den Bürstenhalter integriert und ebenfalls durch die Abschirmkappe abgedeckt werden. Auf diese Weise werden ohne zusätzlichen Aufwand auch von den Induktivitäten abgestrahlte Störungen durch die Kappe abgeschirmt.

Kurze Beschreibungen der Zeichnungen

Ein Ausführungsbeispiel der Erfindung ist in den Zeichnungen dargestellt und in der nachfolgenden Beschreibung näher erläutert.

Es zeigen:
- Figur 1: eine Schaltungsanordnung eines Gleichstrommotors mit Entstörvorrichtung,
- Figur 2: eine perspektivische Darstellung eines Gleichstrommotors mit angeflanschtem Getriebe und einer in das Getriebegehäuse integrierten Entstörvorrichtung,
- Figur 3: eine perspektivische Darstellung einer Bürstenträgeranordnung für einen Gleichstrommotor und
- Figur 4: eine Bürstenträgeranordnung gemäß Figur 3 mit aufgesetzter Abschirmkappe und Kondensatordurchführungen für die Anschlussleitungen.

### Ausführungsformen der Erfindung

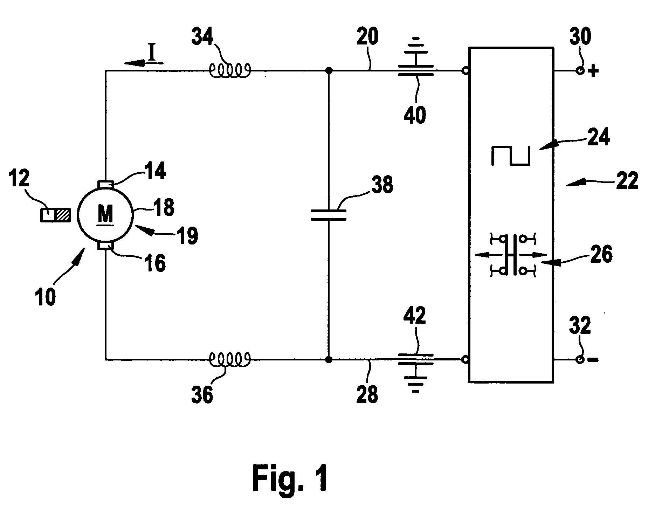

In der Figur 1 ist schematisch eine Schaltungsanordnung eines Gleichstrom-Kommutatormotors 10 mit Entstörmitteln zur Verbesserung der elektromagnetischen Verträglichkeiten (EMV) gezeichnet. Die Darstellung zeigt einen permanentmagnetisch erregten Motor 10 mit einem symbolisch durch einen Permanentmagneten 12 dargestellten Stator und einem über Bürsten 14 und 16 sowie einen Kommutator 18 gespeisten Rotor 19. Zur Leistungsteuerung und zur Bestimmung der Drehrichtung des Motors ist in eine erste Anschlussleitung 20 eine elektronische Steuervorrichtung 22 eingeschaltet, welche im Wesentlichen eine Drehzahlsteuerung 24 mittels Pulsweitenmodulation sowie eine Schaltvorrichtung 26 zur Umpolung der Motoranschlüsse und somit zur Drehrichtungsumkehr enthält. Die erste Bürste 14 ist über eine erste Anschlussleitung 20 mit dem Pluspol 30 und die zweite Bürste 16 über eine zweite Anschlussleitung 28 mit dem Minuspol 32 eines Gleichspannungsnetzes verbunden, vorzugsweise mit dem Bordnetz eines Kraftfahrzeuges. Der Minuspol 32 des Gleichspannungsnetzes liegt an Masse.

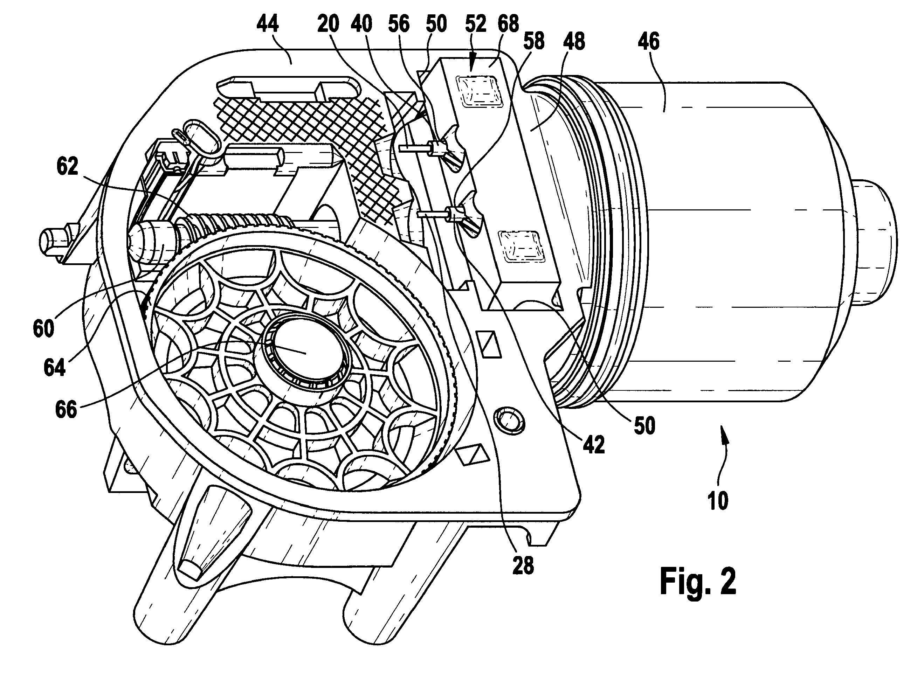

Die durch den Motor 10 verursachten abgestrahlten und leitungsgebundenen Störungen, welche die elektromagnetische Verträglichkeit des Motors bestimmen, werden im Wesentlichen durch dessen Kommutierungssystem mit den Bürsten 14 und 16 und dem Kommutator 18 hervorgerufen. Die auf den in der Zeichnung nicht dargestellten Lamellen des Kommutators laufenden Bürsten verursachen jeweils durch die Unterbrechung des Rotorstromes I beim Ablaufen einer Bürste 14 oder 16 von einer Kommutatorlamelle stromführende Gasentladungen mit sehr kurzen Stromanstiegszeiten und somit hochfrequenter Störabstrahlung. Diese abgestrahlte Störemission kann durch eine elektrisch leitfähige Abschirmung, beispielsweise in Form eines metallischen Motorgehäuses oder Getriebegehäuses, vermieden werden. Liegt dagegen das Kommutierungssystem nicht vollständig innerhalb des metallischen Gehäuses, wie dies anschließend an Hand der Figuren 2 bis 4 näher erläutert wird, so müssen für die Abschirmung der abgestrahlten und der leitungsgebundenen Störungen spezielle Maßnahmen getroffen werden, wie sie in Figur 1 schaltungsmäßig dargestellt sind. Es handelt sich hierbei um jeweils eine Entstördrossel 34 und 36 im Zuge der Anschlussleitungen 20 und 28, um einen vorzugsweise als Folienkondensator ausgeführten, sogenannten X-Kondensator 38 als Überbrückungskondensator zwischen den Anschlussleitungen 20 und 28 zum Kurzschließen hochfrequenter Störungen sowie um zwei jeweils mit Masse verbundene Durchführungskondensatoren 40 und 42 für die Anschlussleitungen 20 und 28 im Austrittsbereich der Anschlussleitungen aus dem metallisch abgeschirmten Bereich des Motor- oder Getriebegehäuses. Die Ausbildung und Anordnung der Entstörmittel wird im Folgenden noch näher erläutert.

Figur 2 zeigt eine perspektivische Darstellung eines Gleichstrommotors 10 mit einem angeflanschten Getriebe, von welchem nur das offene Unterteil 44 dargestellt ist. Dieses ist als metallisches und somit elektrisch leitfähiges Druckgussteil, vorzugsweise als Aluminium-Druckgussteil, hergestellt und wird von einem aus Kosten- und Gewichtsgründen aus Kunststoff bestehenden, in der Zeichnung nicht dargestellten Deckel abgeschlossen. Der Motor 10 besitzt ein ferromagnetisches Gehäuse 46 als magnetisches Rückschlussjoch für an seinem Innenumfang befestigte Permanentmagnete 12. Es ist topfförmig ausgebildet und durch einen metallischen Flansch 48 am Getriebegehäuse vollständig geschlossen, so dass aus ihm keine Störstrahlung austreten kann. Der Kommutator 18 des Motors 10 ragt jedoch in das Getriebegehäuse hinein und liegt im Bereich einer Aussparung 50 im metallischen Unterteil 44 des Getriebegehäuses, welche nach oben offen und somit ohne zusätzliche Abschirmmittel nicht gegen die Abstrahlung von Störungen geschützt ist. Die Abschirmung des Kommutierungssystems nach oben hin erfolgt durch ein zumindest elektrisch leitfähiges, vorzugsweise aber durch ein elektrisch und magnetisch leitfähiges Teil in Form einer als Blechbiegeteil ausgebildeten Kappe 52, welche auf einen in Figur 2 nicht sichtbaren Bürstenträger 54 aufgesetzt ist und direkt oder kapazitiv über das Unterteil 44 des Getriebegehäuses an Masse liegt. Sie gewährleistet eine wirksame Abschirmung der Störstrahlung direkt an der Strahlungsquelle und sichert so insbesondere bei digitalem Rundfunk einen störungsfreien Empfang.

Die Anschlussleitungen 20 und 28 zu den Bürsten 14 und 16 sind am Durchtritt durch die Kappe 52 mittels der Durchführungskondensatoren 40 und 42 gleichzeitig arretiert, isoliert und entstört. Die Durchführungskondensatoren 40 und 42 ihrerseits sind in Öffnungen 56 und 58 der Kappe 52 integriert und wirken hierbei gleichzeitig als HF-Dichtung für die Öffnungen. Sie bestehen aus innen und außen metallisierten Keramikröhrchen, welche einerseits mit den Anschlussleitungen 20 und 28 und andererseits an den Rändern der Öffnungen 56 und 58 mit der Kappe 52 verlötet sind. Die Kappe 52 ist elektrisch und mechanisch mit dem Unterteil 44 des Getriebegehäuses und über dieses direkt (galvanisch) oder kapazitiv mit Masse verbunden. Die Verwendung keramischer Durchführungskondensatoren 40 und 42 gewährleisten eine gute Leitungsdämpfung auch bei sehr hohen Frequenzen bis über 200 MHz hinaus. Alternativ hierzu könnten zur Dämpfung der leitungsgeführten EMV-Störungen jedoch auch keramische Filterbauteile, zum Beispiel in Form von SMD-Kondensatoren benutzt werden, welche sehr nahe an den Durchführungsöffnungen 56 und 58 für die Anschlussleitungen 20 und 28 angeordnet sind.

Von dem Getriebe selbst ist in Figur 2 eine einteilig mit der Motorwelle ausgeführte Getriebewelle 60 mit angeformter Antriebsschnecke 62 erkennbar, welche im Eingriff steht mit einer Außenverzahnung eines Kunststoff-Getrieberades 64, in dem konzentrisch eine Abtriebswelle 66 aus Stahl befestigt ist. Die speziellen Bauformen des Getriebes und des Gleichstrommotors 10 können dabei jeweils in geeigneter Weise dem Anwendungsfall angepasst werden. Insbesondere gilt dies für die Ausgestaltung des Motors 10, welcher beispielsweise anstelle einer permanentmagnetischen Erregung auch eine Erregerwicklung tragen oder für den Betrieb mit zwei unterschiedlichen Drehzahlen mit drei Bürsten ausgestattet werden kann. Die Verschaltung und die Auswahl der Entstörmittel erfolgt dann in grundsätzlich bekannter Weise, beispielsweise derart, dass die elektronische Steuervorrichtung 52 mit Masse verbunden ist und die Entstörmittel in die Anschlussleitungen der beiden anderen, versetzt am Kommutator angeordneten Bürsten eingefügt sind. In diesem Fall sind die Durchführungskondensatoren 40 und 42 den beiden mit dem Pluspol 30 zu verbindenden Anschlussleitungen zugeordnet, während die Masseleitung direkt oder kapazitiv mit der Kappe 52 verbunden wird. Die in Figur 2 nicht dargestellte elektronische Steuervorrichtung 22 ist entweder in den nicht dargestellten Kunststoffdeckel für das Getriebe integriert oder an diesem befestigt.

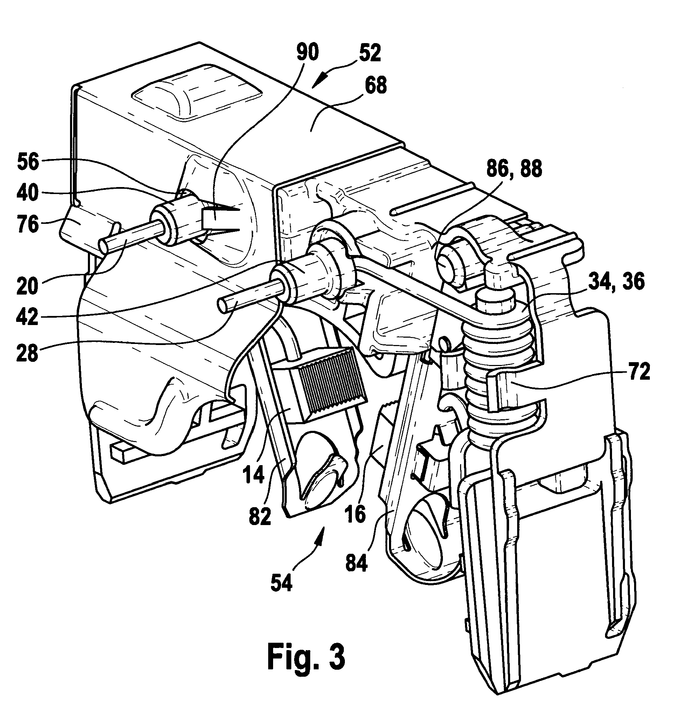

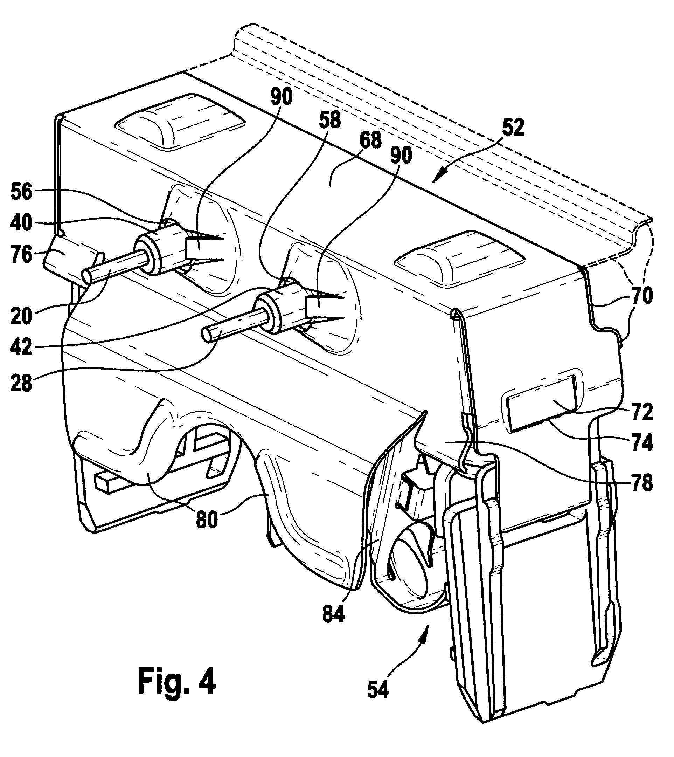

Die Figuren 3 und 4 zeigen den im Wesentlichen U-förmig gestalteten Bürstenträger 54, welcher mit der Kappe 52 durch Form und Kraftschluss zu einer vorgefertigten Baueinheit zusammengefügt ist. Die Kappe 52 überdeckt hierbei zumindest das aus der Aussparung 50 im Unterteil 44 des Getriebegehäuses herausragende Mittelstück des Bürstenträgers 54, in den auch die Entstördrosseln 34 und 36 integriert und durch die Kappe 52 mit abgeschirmt sind. Die Form der Kappe 52 entspricht dabei weitestgehend den Konturen und Abmessungen des Bürstenträgers 52. Hierzu ist sie aus einem Blechteil ausgestanzt und in die Form des Bürstenträgers gebogen, wobei ein zunächst mit der Oberseite 68 der Kappe fluchtender Blechlappen 70 nach dem horizontalen Aufstecken der Kappe auf den Bürstenträger in seine vertikale, am Bürstenträger anliegende Form gebogen wird und so einen sicheren und festen Sitz der Kappe auf dem Bürstenträger gewährleistet. Zur Arretierung der Kappe 52 auf dem Bürstenträger 52 besitzt diese zusätzlich Blechnasen 72 an beiden seitlichen Stirnflächen, welche beim Aufstecken der Kappe in dort vorgesehene Halteöffnungen 74 einrasten. Weitere Blechnasen 76 und 78 sowie ein sickenförmiger Wulst 80 auf einer oder beiden Großflächen der Kappe 52 sichern einen festen Sitz der Baugruppe in der Aussparung 50 des Getriebeunterteils 44.

Der Bürstenträger 54 ist als Hammerbürstenträger ausgebildet, wobei die Bürsten 14 und 16 auf Federschenkeln 82 und 84 sitzen, welche auf Zapfen 86 und 88 am Bürstenträger drehbar gehalten sind und sich im Bürstenträger zur Erzeugung der Anpresskraft am Kommutator federnd abstützen. Zum Aufstecken des Bürstenträgers 54 auf den Kommutator 18 können die Federschenkel 82 und 84 elastisch ausgelenkt werden. Weiterhin ist aus den Figuren 3 und 4 noch erkennbar, dass die Durchführungskondensatoren 40, 42 anstelle oder zusätzlich zu Lötverbindungen durch Klemmnasen 90 in den Öffnungen 56 und 58 der Kappe 52 elektrisch und mechanisch kontaktiert sind.

## Patentansprüche

1. Entstörvorrichtung für ein zumindest aus zwei Bürsten (14, 16), einem Kommutator (18) und einer Bürstenträgeranordnung (54) bestehendes Kommutierungssystem (14, 16; 18; 54) eines Gleichstrommotors (10), dessen Kommutatorlamellen mit den wenigstens zwei Bürsten (14, 16) der Bürstenträgeranordnung (54) zusammenwirken, wobei die Bürsten (14, 16) über Anschlussleitungen (20, 28) an ein Gleichspannungsnetz (30, 32) anschließbar sind, wobei die Anschlussleitungen (20, 28) über wenigstens eine Kapazität (38) miteinander und/oder mit Masse verbunden sind, und wobei das Kommutierungssystem (14, 16; 18; 54) in einem von einem angeflanschten Getriebe (60, 62, 64, 66) nicht abgeschirmten Bereich durch ein elektrisch leitfähiges Teil mit Durchführungsöffnungen (56, 58) für kapazitiv an das Gehäuse (46) des Motors (10) angebundene Anschlussleitungen (20, 28) der Bürsten (14, 16) partiell abgeschirmt- ist, **dadurch gekennzeichnet, dass** das Kommutierungssystem (14, 16; 18; 54) im Bereich einer Aussparung (50) eines Getriebegehäuses (44) des Getriebes (60, 62, 64, 66) angeordnet ist, welcher durch eine elektrisch und magnetisch leitfähige Abschirmkappe (52) des elektrisch leitfähigen Teils im Wesentlichen abgedeckt ist.

2. Entstörvorrichtung nach Anspruch 1, **dadurch gekennzeichnet, dass** in die Gehäuseöffnungen (56, 58) Durchführungskondensatoren (40, 42) für die Anschlussleitungen (20, 28) integriert sind.

3. Entstörvorrichtung nach einem der vorhergehenden Ansprüche, **dadurch gekennzeichet,** dass die Abschirmkappe (52) wannenförmig ausgebildet ist und den vom Kommutator (18) abgewandten äußeren Teil des Bürstenträgers (54) überdeckt.

4. Entstörvorrichtung nach einem der vorhergehenden Ansprüche, **dadurch gekennzeichnet, dass** der Bürstenträger (54) im Wesentlichen U-förmig gestaltet ist und die Abschrimkappe (52) zumindest die aus der Gehäuseaussparung (50) herausragenden Teile des Bürstenträgers (54) abdeckt.

5. Entstörvorrichtung nach einem der vorhergehenden Ansprüche, **dadurch gekennzeichnet, dass** die Abschirmkappe (52) als Blechbiegeteil ausgebildet ist.

6. Entstörvorrichtung nach einem der vorhergehenden Ansprüche, **dadurch gekennzeichnet, dass** die Abschirmkappe (52) Öffnungen (56, 58) aufweist, in denen keramische Durchführungskondensatoren (40, 42) für die Anschlussleitungen (20, 28) sitzen.

7. Entstörvorrichtung nach einem der vorhergehenden Ansprüche, **dadurch gekennzeichnet, dass** die Abschirmkappe (52) in die Anschlussleitungen (20, 28) der Bürsten (14, 16) eingeschaltete und räumlich in die Bürstenträgeranordnung (54) integrierte Induktivitäten (34, 36) mit überdeckt.

8. Entstörvorrichtung nach einem der vorhergehenden Ansprüche, **dadurch gekennzeichnet, dass** die Bürstenträgeranordnung (54) und die Abschirmkappe (52) eine vorgefertigte Baueinheit bilden.

9. Entstörvorrichtung nach einem der vorhergehenden Ansprüche, **dadurch gekennzeichnet, dass** das Getriebegehäuse (44) durch einen Kunststoffdeckel abgeschlossen ist.

## Claims

1. Interference-suppression apparatus for a commutation system (14, 16; 18; 54) of a DC motor (10), the said commutation system comprising at least two brushes (14, 16), a commutator (18) and a brush support arrangement (54), the commutator laminations of the said DC motor interacting with the at least two brushes (14, 16) of the brush support arrangement (54), it being possible to connect the brushes (14, 16) to a DC voltage supply system (30, 32) via connection lines (20, 28), the connection lines (20, 28) being connected to one another and/or to ground via at least one capacitor (38), and the commutation system (14, 16; 18; 54) being partially screened by an electrically conductive part having leadthrough openings (56, 58) for connection lines (20, 28) of the brushes (14, 16) which are capacitively connected to the housing (46) of the motor (10) in a region which is not screened by a flange-connected gear mechanism (60, 62, 64, 66), **characterized in that** the commutation system (14, 16; 18; 54) is arranged in the region of a cutout (50) in a gear mechanism housing (44) of the gear mechanism (60, 62, 64, 66) which is substantially covered by an electrically conductive and magnetically permeable screening cap (52) of the electrically conductive part.

2. Interference-suppression apparatus according to Claim 1, **characterized in that** leadthrough capacitors '(40, 42) for the connection lines (20, 28) are integrated in the housing openings (56, 58).

3. Interference-suppression apparatus according to either of the preceding claims, **characterized in that** the screening cap (52) is in the form of a trough and covers the outer part of the brush support (54) which is averted from the commutator (18).

4. Interference-suppression apparatus according to one of the preceding claims, **characterized in that** the brush support (54) is of substantially U-shaped design and the screening cap (52) covers at least those parts of the brush support (54) which project from the housing cutout (50).

5. Interference-suppression apparatus according to one of the preceding claims, **characterized in that** the screening cap (52) is in the form of a bent sheet metal part.

6. Interference-suppression apparatus according to one of the preceding claims, **characterized in that** the screening cap (52) has openings (56, 58) in which ceramic leadthrough capacitors (40, 42) for the connection lines (20, 28) are seated.

7. Interference-suppression apparatus according to one of the preceding claims, **characterized in that** the screening cap (52) also covers coils (34, 36) which are connected into the connection lines (20, 28) of the brushes (14, 16) and are physically integrated in the brush support arrangement (54).

8. Interference-suppression apparatus according to one of the preceding claims, **characterized in that** the brush support arrangement (54) and the screening cap (52) form a prefabricated unit.

9. Interference-suppression apparatus according to one of the preceding claims, **characterized in that** the gear mechanism housing (44) is closed off by a plastic cover.

## Revendications

1. Dispositif d'antiparasitage pour un système de commutation (14, 16 ; 18 ; 54) d'un moteur à courant continu (10), constitué d'au moins deux balais (14, 16), d'un collecteur (18) et d'un arrangement porte-balais (54), dont les lamelles de collecteur interagissent avec les au moins deux balais (14, 16) de l'arrangement porte-balais (54), les balais (14, 16) pouvant être raccordés à un réseau de tension continue (30, 32) par le biais de lignes de raccordement (20, 28), les lignes de raccordement (20, 28) étant reliées entre elles et/ou avec la masse par le biais d'au moins un condensateur (38), et le système de commutation (14, 16 ; 18 ; 54), dans une zone qui n'est pas protégée par un engrenage (60, 62, 64, 66) fixé par bride, étant partiellement blindé par une pièce électriquement conductrice munie d'ouvertures de traversée (56, 58) pour les lignes de raccordement (20, 28) des balais (14, 16) connectées de manière capacitive au carter (46) du moteur (10), **caractérisé en ce que** le système de commutation (14, 16 ; 18 ; 54) est disposé dans la zone d'un évidement (50) d'un carter d'engrenage (44) de l'engrenage (60, 62, 64, 66), lequel est recouvert pour l'essentiel par un capot de blindage (52) électriquement et magnétiquement conducteur de la pièce électriquement conductrice.

2. Dispositif d'antiparasitage selon la revendication 1, **caractérisé en ce que** des condensateurs de traversée (40, 42) pour les lignes de raccordement (20, 28) sont intégrés dans les ouvertures du carter (56, 58).

3. Dispositif d'antiparasitage selon l'une des revendications précédentes, **caractérisé en ce que** le capot de blindage (52) est réalisé en forme de cuvette et recouvre la partie extérieure du porte-balais (54) à l'opposé du collecteur (18).

4. Dispositif d'antiparasitage selon l'une des revendications précédentes, **caractérisé en ce que** le porte-balais (54) est configuré pour l'essentiel en forme de U et le capot de blindage (52) recouvre au moins la partie du porte-balais (54) qui fait saillie hors de l'évidement du carter (50).

5. Dispositif d'antiparasitage selon l'une des revendications précédentes, **caractérisé en ce que** le capot de blindage (52) est réalisé sous la forme d'une pièce pliée en tôle.

6. Dispositif d'antiparasitage selon l'une des revendications précédentes, **caractérisé en ce que** le capot de blindage (52) présente des ouvertures (56, 58) dans lesquelles reposent des condensateurs de traversée (40, 42) en céramique pour les lignes de raccordement (20, 28).

7. Dispositif d'antiparasitage selon l'une des revendications précédentes, **caractérisé en ce que** le capot de blindage (52) recouvre en même temps des inductances (34, 36) mises en circuit dans les lignes de raccordement (20, 28) des balais (14, 16) et intégrées physiquement dans l'arrangement porte-balais (54).

8. Dispositif d'antiparasitage selon l'une des revendications précédentes, **caractérisé en ce que** l'arrangement porte-balais (54) et le capot de blindage (52) forment un composant préfabriqué.

9. Dispositif d'antiparasitage selon l'une des revendications précédentes, **caractérisé en ce que** le carter d'engrenage (44) est fermé par un couvercle en plastique.
